# EUROPEAN PATENT SPECIFICATION

(11) **EP 0 444 360 B1**
(45) Date of publication and mention of the grant of the patent: **10.11.1993**
(21) Application number: 90314274.3
(22) Date of filing: 24.12.1990
(51) Int. Cl.: F16B 2/10

(54) **Clamping device**
Klemmvorrichtung
Dispositif de serrage

(30) Priority: 29.01.1990 GB 9001971
(43) Date of publication of application: 04.09.1991
(73) Proprietor: LAWTEX GROUP PLC, London EC2 (GB)
(72) Inventor: Schaefer, Peter Graham, Bramhall, Cheshire, SK7 3NB (GB)
(74) Representative: Kelvie, George Thomas

(56) References cited:
- CH-A- 397 336
- DE-C- 3 824 482
- US-A- 4 010 517

## Description

This invention relates to a clamping device, particularly but not exclusively for attachment of a canopy or parasol or similar accessory to a tubular frame member of a pushchair or buggy. Such a clamping device is for example known from CH-A-397 336.

An object of the invention is to provide a clamping device, capable of securing a first member to a second member, which on the one hand is readily clampable to the second element in any selected position and in a manner not prone to slippage, yet on the other hand is readily detachable too, and which also enables adjustment of the orientation of the first member relative to the second member. A further object is to provide a clamping device which is especially easy for a user to manipulate in effecting any of the aforesaid operations.

According to the invention a clamping device comprises two separate components, each providing a respective jaw portion which jaw portions mutually oppose each other to grip a workpiece therebetween, a folded over strip of flexible material providing a hinge connection between said components, a bolt having a shaft which extends through both components, and a nut which engages the shaft of the bolt to retain the components thereon, wherein the material of the strip is also resilient and the strip extends between the components to provide resilient facing surfaces of both opposing jaw portions, and in that the strip is so arranged between the components as to permit variation in the location of articulation therebetween.

In use, a first member, such as a parasol handle or canopy frame member can be connected to a washer located on the shaft of the bolt between the nut and the adjacent clamp component or secured between the nut and the washer, and a second member, such as a tubular pushchair frame member can be clamped between the jaw portions of the two clamp components. The orientation of the first member relative to the second can then readily be adjusted by loosening of the nut and rotation of the first member and/or the washer relative to the adjacent component.

Regions of the flexible strip overlying the jaw portions, by virtue of their resilience, enhance the grip and minimize slippage of the jaws in clamping.

The absence of a hinge or pivot connection between the two components simplifies their fabrication, and also enables the jaws to be clamped, effectively, around members of a wider range of sizes. Furthermore, the flexible strip permits a degree of adjustment in the relative positions of the components as they swing apart and are fitted around a member they are to grip.

In preferred embodiments of the device of the invention respective end regions of the flexible strip locate in recessed areas in the jaw portions of the two components.

Furthermore, the flexible strip preferably overlies substantially the entire extent of the facing surfaces of the two components and is folded in a central region which is at the end of the device remote from the jaw portions. In such instances the bolt also extends through the flexible strip at two places, and the strip is advantageously provided with lugs for frictional engagement into further recesses in the respective clamp components so as to reduce the degree of permissible relative rotation between the two opposing components. This latter feature makes the device easier for the user to manipulate while locating the jaws around a member and securing same by tightening the nut.

The washer, which is generally provided, advantageously includes means connectable to the first member. In this respect, in a case where the device is intended for securement of a first member, such as a canopy frame member which is in the form of a flat strip, the washer is provided on its face remote from the adjacent clamp component with a transverse recess so that the first member can engage therein and be retained non-rotatably relative thereto, when the nut is tightened. Alternatively, and particularly in a case where the device is intended for securement of a first member which is cylindrical, e.g. a parasol handle, the washer may be directly connected to or integrally formed with a holder for such a member, which holder may include a socket for reception of the member.

In any event, mutually abutting faces of the washer and the adjacent clamp component are advantageously provided with circular arrays of teeth to facilitate controlled angular adjustment of the washer, and any first member connected thereto, when the nut is somewhat loosened, yet prevent unintentional relative rotation when the nut is tightened.

A further advantageous feature is provision, in that one of the clamp components which in the assembled device is remote from the washer and nut, of a tapered bore so as to permit a wide variation in the axial orientation of the bolt, which extends therethrough, and consequently a wide variation in the relative angular dispositions of the respective clamping components such that the jaw portions can effectively grip around members of a wide range of sizes.

The head of the bolt may conveniently be countersunk in a depression in the surface of the said component remote from the washer and nut.

A preferred practical embodiment of a clamping device in accordance with the invention will now be described with reference to the accompanying drawings, in which:
Fig. 1 is a perspective view of the said preferred embodiment;
Fig. 2 is a side view thereof;
Fig. 3 is a rear view thereof, in the direction of arrow III in Fig. 2;
Fig. 4 is a view of the other side of this embodiment, only partially in section along line X-X of Fig. 3;
Fig. 5 is a plan view of the upper clamp component of the device of Figs. 1 to 4;
Fig. 6 is an underside view of the device;
Fig. 7 is another partial cross-sectional view of the same device, corresponding to Fig. 4, but with both clamp components sectioned along line X-X in Fig. 3.
Fig. 8 is a schematic side view of the folded flexible strip of the device of Figs. 1 to 7;
Fig. 9 is a schematic underside view of the strip shown in Fig. 8;
Fig. 10 is an underside view of the upper clamp component of the device of Figs. 1 to 7;
Fig. 11 is a plan view of the lower clamp component of the device of Figs. 1 to 7;
Fig. 12 is a reduced scale side view illustrating the same embodiment of the device of the invention in use clamped to a tubular member and securing another elongate member thereto;
Fig. 13 is a view corresponding to Fig. 12 showing the configuration of this device when clamped to a tubular member of considerably larger diameter; and
Fig. 14 is a perspective view of an alternative form of washer, which can be substituted for that shown in the device of Figs. 1 to 13.

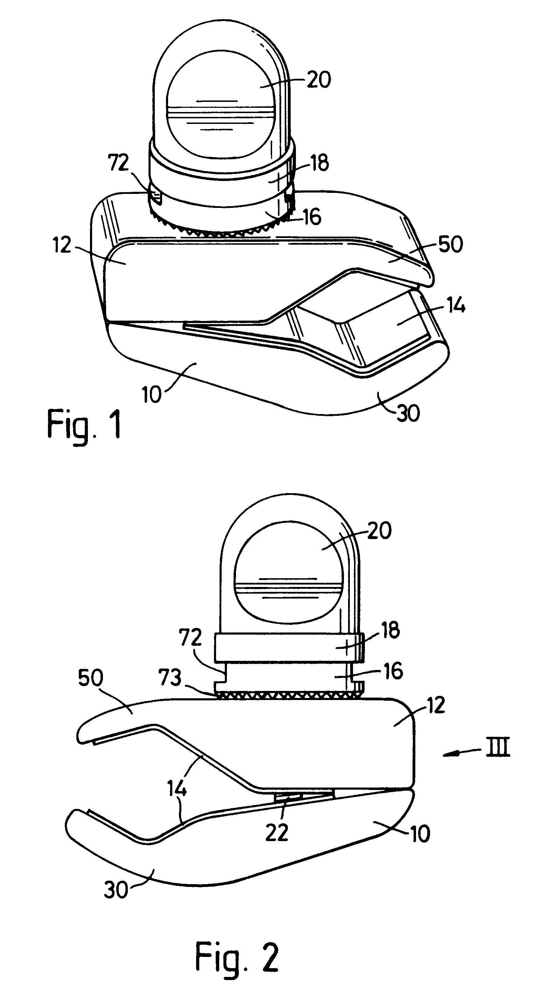

As clearly shown in the drawings, and initially with particular reference to Figs. 1 to 4 and Fig. 7, a preferred practical clamping device embodying the invention comprises first and second clamp components 10, 12, a strip 14 of flexible, resilient plastics material, which is disposed between the said components, 10, 12 in the assembled condition of the device, a bolt 22, a washer 16 in the form of a substantially circular disc, and a nut 18, with an enlarged manually grippable portion 20. The clamp components 10, 12, the washer 16 and the nut 18 are conveniently moulded of substantially rigid plastics material, while the bolt 22 is of metal, probably steel. Of course, other materials are possible.

Each clamp component 10, 12 is of generally curving configuration and includes a respective jaw portion 30, 50 towards one end and the device is intended to be assembled (see Figs. 1, 2, 4 and 7) so that these jaw portions 30, 50 oppose each other for clamping purposes

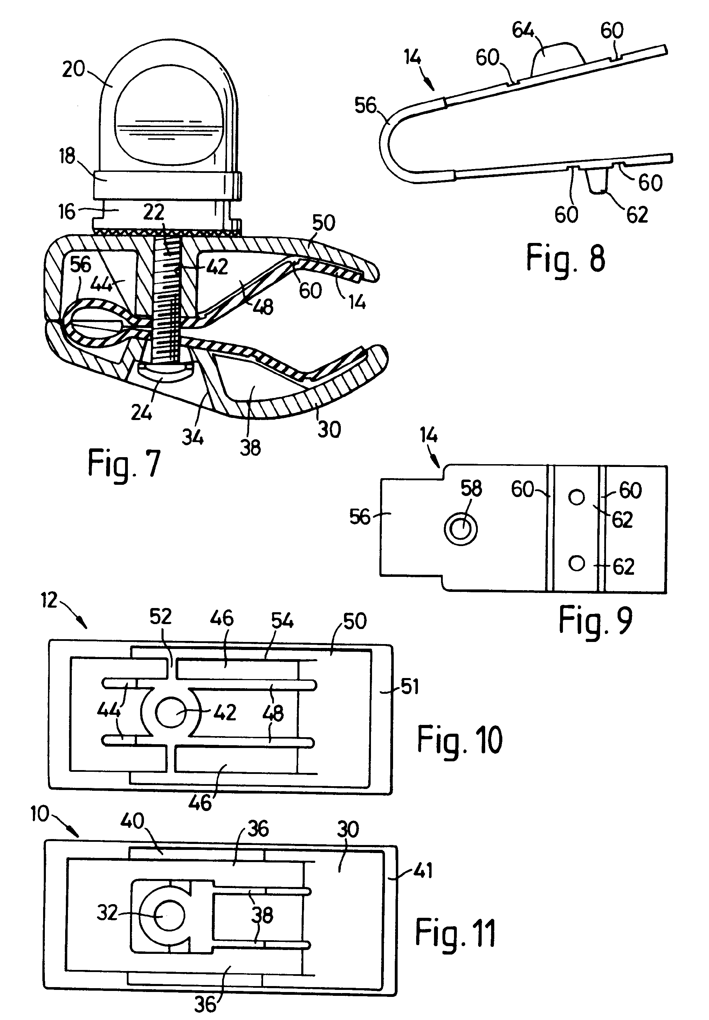

The first component 10, which is shown lowermost in the drawings, although its orientation is immaterial when the device is used, has a tapered bore 32 therethrough to the rear of the jaw portion 30, including a tapered countersunk portion 34 for accommodating the head 24 of the bolt 22 (see Figs. 4 and 7). As best shown in Fig. 11, this first component 10 also has, on its inner side (relative to its curvature and its position in the assembled device) continuous side and rear recess regions to the side and rear of the bore 32, as well as a central recess region in front of the bore 32 and delimited from the side recess regions 36 by respective tapering flanges 38. Each side wall of this component is slightly recessed so as to provide an inner ledge 40 from a location roughly in alignment with the bore 32 into the jaw portion 30. At the front edge, there is a raised lip 41.

The second component 12, which is shown uppermost in the drawings, also has a bore 42 therethrough to the rear of its jaw portion 50, but this bore 42 is not tapered. As shown in Fig. 10, the inner side of this second component 12 is generally similar to that of the first component 10 in that it has side and rear recessed regions to the side and rear of the bore 42 and a central recessed region to the front of the bore 42, delimited from the side recessed regions 46 by respective tapering flanges 48. However, in this case further tapered flanges 44, in alignment with the front flanges 48, extend rearward from the bore 42 and the side and rear recessed regions are separated by cross walls 52. The side walls of this second component 12 are similarly slightly recessed so as to provide inner ledges 54 from a location roughly in alignment with the bore 42 into the jaw portion 50. Also, at the front edge there is a raised lip 51.

The flexible strip 14 has a central region 56 of narrower width, as shown in Fig. 8, wherein in use it is folded over. Also, as shown in Fig. 9, it has two bores 58, adjacent respective ends of this central region, two transverse grooves 60 formed in each of its end regions, and a pair of lugs 62, 64 between each pair of aforesaid grooves 60.

In use, when the clamping device is assembled, the bolt 22 is inserted through the tapered bore 32 in the first clamp components 10, through the respective bores 58 of the folded flexible strip 14 and then through the bore 42 in the second clamp component 12, so that the components 10, 12 are held in alignment with their recessed inner faces and their jaw portions 30, 50 opposing each other and with the flexible strip 14 retained therebetween, as best shown in Fig. 7. In this respect, the strip 14 is securely retained by its respective lugs 62, 64 locating snugly into the respective side recessed regions 36, 46 outwardly of the respective flanges 38, 48. Moreover in the respective jaw regions 30, 50 the strip 14 neatly overlies the respective tapered flanges 38, 48, its edges seat on the respective side wall ledges 40, 54, and its ends fit behind the lips 41. 51. The grooves 60 match the position of greatest curvature on the flanges 38, 48 to enable greater flexure of the strip 14 at these places. The central region 56 of the strip, which is folded and narrower is accommodated in the respective rear recesses regions of the two components 10, 12.

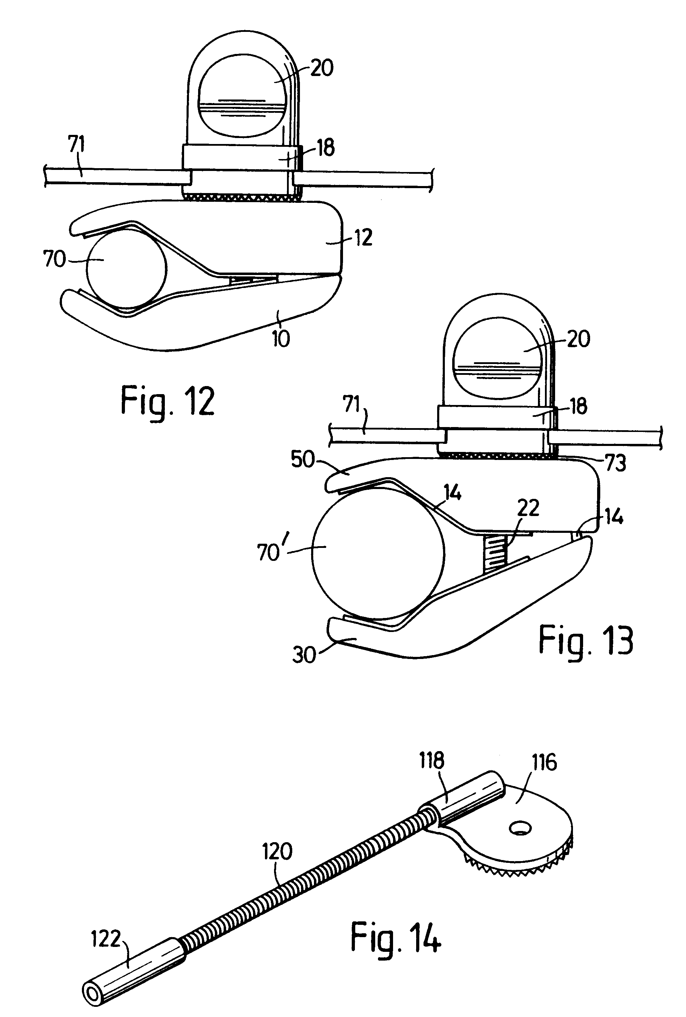

The folded over flexible strip 14 serves several important purposes. It generally holds the two clamp components 10, 12 together and by virtue of being folded in its central region 56 it allows flexible articulation therebetween, so that a wide range of members of different sizes, e.g. tube members of different diameter can be clamped between the jaws 30, 50, as shown in Figs. 12 and 13. Moreover, in this respect, and as is particularly clear from a comparison of Figs. 12 an 13, the location of articulation, i.e. the point of intersection of imaginary extensions of the components, about which they can be considered to swing, is able to vary e.g. to accommodate a particularly large member between the jaws. When this occurs, the rear end of one component is somewhat offset from its original position relative to the other component (see Fig. 13).

Additionally, because the strip 14 comprises resilient material its end regions function as respective resilient pads where they overlie the jaw portions 30, 50, and enhance the gripping efficiency, minimizing slippage relative to the member being gripped. Furthermore, the firm location of the lugs 62, 64 in the respective recessed regions of the components 10, 12 serves to limit the degree of relative rotation and of variation in relative positions of the two components and generally contributes to overall rigidity and cohesion of the device so that it is easy for a user to manipulate when seeking to clamp it to or detach it from a workpiece.

The tapering of the bore 32 additionally enables the components 10, 12, to be secured by the nut 18 and bolt 22 in a wide range of relative angular dispositions, so as to provide effective clamping around members of different size.

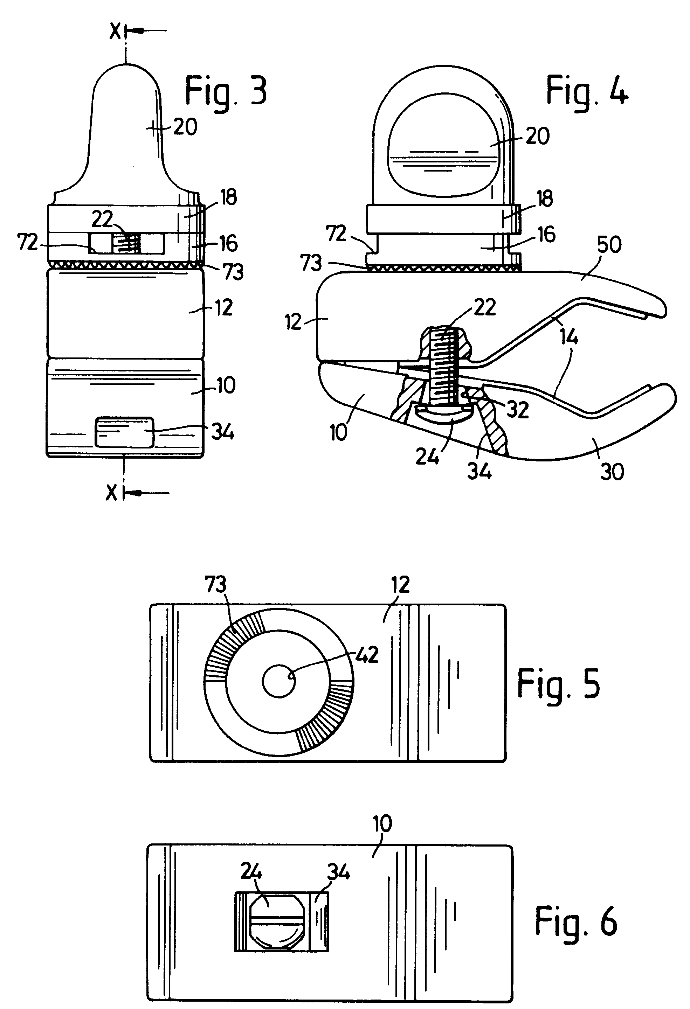

The washer 16, located on the bolt 22 between the secured clamp component 12 and the nut 18, serves for attachment of a second member 71, and for its angular adjustment relative to a first member 70, 70' clamped between the jaws 30, 50, as indicated in Figs. 12 and 13. In this respect the washer 16 has a transverse depression 72 in its surface remote from the second component 12 and is thereby adapted for engagement therein of a portion of a member 71 which is in the form of a flat strip or bar, e.g. a canopy frame member. The member 71 preferably also has an aperture therein for locating on the bolt 22. Additionally, the abutting surface regions of the washer 16 and the component 12 are provided with interengaging, circular, teeth arrays 73 (see Fig. 5) whereby controlled angular adjustment of the washer 16 (and the second member 71 engaged therewith) relative to the clamped components 10, 12 is possible upon slight loosening of the nut 18.

The embodiment just described is, of course, merely illustrative, not limitative and many variations in the detailed construction of such a clamping device are possible within the scope of the invention. In particular, the form of the washer may vary so that it is adapted for connection of other shapes of member, e.g. cylindrical or tubular, or for attachment of the said member in some other way. In this respect Fig. 14 shows a washer 116 provided with an integral holder portion 118, which is connected via a flexible shaft 120 (in this case a helical spring enclosing a core of pliable wires) to a socket 122 for reception of the end of a tubular parasol handle. This washer 116 can be used, wherever appropriate, in place of the washer 16, in the device of Figs. 1 to 13.

## Claims

1. A clamping device comprising two components (10,12), each providing a respective jaw portion (30,50), which jaw portions mutually oppose each other to grip a workpiece therebetween, a folded over strip (14) of flexible material providing a hinge connection between said components (10,12), a bolt (22) having a shaft which extends through both components, and a nut (18) which engages the shaft of the bolt to retain the components thereon, wherein the material of the strip (14) is also resilient and the strip extends between the components (10,12) to provide resilient facing surfaces of both opposing jaw portions (30,50), and in that the strip is so arranged between the components as to permit variation in the location of articulation therebetween.

2. A device according to claim 1, wherein respective end regions of the flexible strip (14) locate in recessed areas in the jaw portions (30,50) of the two components (10,12).

3. A device according to claim 1 or 2 wherein the flexible strip (14) overlies substantially the entire extent of the facing surfaces of the two components (10,12) and is folded in a central region (56) which is at the end of the device remote from the jaw portions (30,50).

4. A device according to claim 1, 2 or 3 wherein the bolt (22) extends through the flexible strip (14) at two places.

5. A device according to any preceding claim wherein the flexible strip (14) is provided with lugs (62,64) for frictional engagement into recesses (36,46) in the respective clamp components (10,12).

6. A device according to any preceding claim wherein a washer (16) is located on the shaft of the bolt (22) between the nut (18) and the adjacent clamp component (12) and said washer (16) is provided on its face remote from the adjacent clamp component (12) with a transverse recess (72) wherein a member (71) to be connected can engage and be retained non-rotatably when the nut (18) is tightened.

7. A device according to any of claims 1 to 5 wherein a washer (116) is located on the shaft of the bolt (22) between the nut (18) and the adjacent clamp component (12) and said washer (116) is directly connected to or integrally formed with a holder which includes a socket (122) for reception of a member to be connected.

8. A device according to claim 6 or 7 wherein mutually abutting faces of the washer (16, 116) and the adjacent clamp component (12) are provided with circular arrays of teeth (73) to facilitate controlled angular adjustment of the washer, and any member connected thereto, when the nut (18) is somewhat loosened, yet prevent unintentional relative rotation when the nut is tightened.

9. A device according to any preceding claim wherein that one of the clamp components (10), which in the assembled device is remote from the nut (18), has a tapered bore (32,34), through which the shaft of the bolt (22) extends, so as to permit a wide variation in the axial orientation of the bolt and consequently a wide variation in the relative angular dispositions of the respective clamping components (10,12).

## Patentansprüche

1. Klemmvorrichtung, umfassend zwei Komponenten (10, 12) mit jeweils einem entsprechenden Backenteil (30,50), wobei die Backenteile zur Aufnahme eines Werkstücks zwischen sich einander gegenüberliegend angeordnet sind, einem umgefalteten Streifen (14) aus einem flexiblen Material zur Bildung einer gelenkigen Verbindung zwischen diesen Komponenten (10, 12), einer Schraube (22) mit einem sich durch die beiden Komponenten hindurch erstreckenden Schaft und einer auf den Schaft aufschraubbaren Mutter (18), um die Komponenten auf diesem zu halten, wobei das Material des Streifens ferner elastisch ist und der Streifen sich zwischen den Komponenten (10, 12) erstreckt, um elastische einander gegenüberliegende Oberflächen der beiden gegenüberliegenden Backenteile (30, 50) zu bilden, und der Streifen zwischen den Komponenten so angeordnet ist, daß er ein Variieren der gelenkigen Stelle zwischen diesen ermöglicht.

2. Vorrichtung nach Anspruch 1, bei welcher jeweilige Endbereiche des flexiblen Streifens (14) sich in Ausnehmungen der Backenteile (30, 50) der beiden Komponenten (10, 12) befinden.

3. Vorrichtung nach Anspruch 1 oder 2, bei welcher der flexible Streifen (14) im wesentlichen die Gesamtheit der beiden einander gegenüberliegenden Oberflächen der beiden Komponenten (10, 12) abdeckt und in einem zentralen Bereich (56) gefaltet ist, welcher sich am Ende der Vorrichtung und an einer von den Backenteilen (30, 50) entfernten Stelle befindet.

4. Vorrichtung nach Anspruch 1, 2 oder 3, bei welcher die Schraube (22) sich durch den flexiblen Streifen (14) an zwei Stellen erstreckt.

5. Vorrichtung nach jedem der vorangehenden Ansprüche, bei welcher der flexible Streifen (14) mit Nasen (62, 64) für den kraftschlüssigen Eingriff in Ausnehmungen (36, 46) in den jeweiligen Klemmkomponenten (10, 12) versehen ist.

6. Vorrichtung nach jedem der vorangehenden Ansprüche, bei welcher ein Abstandselement (16) an dem Schaft der Schraube (22) zwischen der Nut (18) und der angrenzenden Klemmkomponente (12) vorgesehen ist und das Abstandselement (16) an seiner von der angrenzenden Klemmkomponente (12) entfernten Fläche mit einer quer verlaufenden Ausnehmung (72) versehen ist, in die ein anzukoppelndes Element (71) eingreifen und gegen ein Verdrehen beim Anziehen der Mutter (18) gehalten werden kann.

7. Vorrichtung nach jedem der Ansprüche 1 bis 5, bei welcher ein Abstandselement (116) an dem Schaft der Schraube (22) zwischen der Mutter (18) und der angrenzenden Klemmkomponente (12) angeordnet ist und das Abstandselement entweder direkt mit einem Halteelement verbunden ist oder mit diesem ein Bauteil bildet, wobei das Halteelement eine Buchse (122) zur Aufnahme eines anzukoppelnden Elementes aufweist.

8. Vorrichtung nach Anspruch 6 oder 7, bei welcher aneinander anliegende Flächen des Abstandselementes (16, 116) und der angrenzenden Klemmkomponente (12) mit kreisförmigen Zahnanordnungen (73) versehen sind, um eine kontrollierte Winkeleinstellung des Abstandselementes sowie jedes mit diesem verbundenen Elementes zu ermöglichen, wenn die Mutter (18) leicht gelockert ist, während jedoch eine unerwünschte Relativbewegung beim Anziehen der Mutter verhindert wird.

9. Vorrichtung nach den vorangehenden Ansprüchen, bei welcher diejenige Klemmkomponente (10), die in der zusammengebauten Vorrichtung von der Mutter (18) entfernt angeordnet ist, eine sich verjüngende Bohrung (32, 34) aufweist, durch die sich der Schaft der Schraube (22) erstreckt, um eine große Variationsbreite in der axialen Ausrichtung der Schraube und damit eine große Variationsbreite in den relativen Winkelstellungen der jeweiligen Klemmkomponenten (10, 12) zu ermöglichen.

## Revendications

1. Dispositif de serrage comprenant deux éléments (10, 12) pourvus chacun d'une partie de machoîre respective (30, 50), lesquelles parties de mâchoire sont en regard l'une de l'autre pour saisir une pièce entre elles, une bande repliée (14) constituée d'un matériau flexible réalisant une connection à charnière entre lesdits éléments (10, 12), un boulon (22) ayant un corps qui s'étend au travers des deux éléments, et un écrou (18) qui s'engage sur le corps du boulon pour y maintenir les éléments, dans lequel le matériau de la bande (14) est également résilient et la bande s'étend entre les éléments (10, 12) pour former des surfaces résilientes en regard pour les deux parties de mâchoires opposées (30, 50), et la bande est disposée de telle sorte entre les éléments à permettre une variation de l'endroit où lesdits élements s'articulent.

2. Dispositif selon la revendication 1, dans lequel des régions d'extrémité respectives de la bande flexible (14) se situent dans des zones en creux dans les parties de macholre (30, 50) des deux éléments (10, 12).

3. Dispositif selon la revendication 1 ou la revendication 2, dans lequel la bande flexible (14) recouvre sensiblement la totalité des surfaces en regard des deux éléments (10, 12) et est repliée dans une région centrale (56) qui est à l'extrémité du dispositif éloignée des parties de mâchoires (30, 50).

4. Dispositif selon la revendication 1, 2 ou 3, dans lequel le boulon (22) s'étend au travers de la bande flexible (14) en deux endroits.

5. Dispositif selon l'une quelconque des revendications précédentes, dans lequel la bande flexible (14) est dotée d'oreilles (62, 64) destinées à s'engager par frottement dans des évidements (36, 46) dans les éléments de serrage respectifs (10, 12).

6. Dispositif selon l'une quelconque des revendications précédentes, dans lequel une rondelle (16) est située sur le corps du boulon (22) entre l'écrou (18) et l'élément de serrage adjacent (12) et ladite rondelle (16) est pourvue sur sa face éloignée de l'élément de serrage adjacente (12) d'un évidement transversal (72) dans lequel un organe (71) de fixation peut être engagé et être maintenu non-rotatif lorsque l'écrou (18) est serré.

7. Dispositif selon l'une quelconque des revendications 1 à 5, dans lequel une rondelle (116) est située sur le corps du boulon (22) entre l'écrou (18) et l'élément de serrage adjacent (12) et ladite rondelle (116) est directement fixée à ou formée en une seule pièce avec un organe de préhension qui comprend un embout (122) pour la réception d'un organe à fixer.

8. Dispositif selon la revendication 6 ou la revendication 7, dans lequel des faces en regard de la rondelle (16, 116) et de l'élément de serrage adjacent (12) sont dotées de rangées circulaires de dents (73) pour faciliter l'ajustement angulaire contrôlé de la rondelle, et un organe quelconque qui y est fixé, lorsque l'écrou (18) est quelque peu desserré, empêche cependant une rotation relative involontaire lorsque l'écrou est serré.

9. Dispositif selon l'une quelconque des revendications précédentes, dans lequel l'élément de serrage (10) qui, dans le dispositif assemblé est éloigné de l'écrou (18), a un alésage conique (32, 34), au travers duquel s'étend le corps du boulon (22), de façon à permettre une grande variation suivant l'orientation axiale du boulon et par conséquent une grande variation dans les dispositions angulaires relatives des éléments de serrage respectifs (10, 12).
